# EUROPEAN PATENT APPLICATION

(11) **EP 4 550 242 A1**
(43) Date of publication of application: **07.05.2025**
(21) Application number: 23306905.3
(22) Date of filing: 03.11.2023
(51) Int. Cl.: G06Q 20/20, G06Q 20/22, G06Q 20/32, G06Q 20/34, G06Q 20/38, G06Q 20/40, G06Q 20/42

(54) **METHOD FOR MANAGING A PROXIMITY MONETARY TRANSACTION**

(71) Applicant: THALES DIS FRANCE SAS, 92190 Meudon (FR)
(72) Inventor: GASTON GUIRAO, Lorenzo, 78180 Montigny-le-Bretonneux (FR); BRINGER, Laurence, 13105 Mimet (FR)
(74) Representative: Grevin, Emmanuel

(57) **Abstract**

The invention is a method for managing a monetary transaction for an amount involving a banking terminal (20) and a payment instrument (10) assigned to a user (75) and comprising a payment application (11) designed to participate to the monetary transaction in a first way by using a conventional account uniquely assigned to the user and in a second way by using a relay account uniquely assigned to another person (77). Responsive to a command (81) requesting a cryptogram to be generated, the payment instrument performs a selection procedure leading to select the second way only if a predefined condition is met. Only if the second way is selected, the payment instrument sends to the banking terminal a relay request comprising a first identifier of the relay account and requesting that the amount be paid from the relay account, subject to agreement of the person specifically for said monetary transaction.

## Description

### (Field of the invention)

The present invention relates to methods for managing a face-to-face monetary transaction. It relates particularly to methods of managing an in-person transaction in which a person carries a payment instrument that is involved with a banking terminal in the monetary transaction.

### (Background of the invention)

Inflation and economic difficulties are driving the increased use of credit cards, new products for delayed payments (e.g. Buy-Now-Pay-Later) or solutions enabling to negotiate on-the-fly the payment conditions (e.g., Request-to-Pay associated to an instant payment instrument). This fact is leading to an increased number of over-indebted low-income households observed in certain countries.

Financial transactions or electronic funds transfers are done today through the interaction of a payment instrument with a connected banking terminal, and the exchange of a payload with a remote server. For example, the monetary transaction may be a payment carried out via a Point-Of-Sale (POS) terminal or a cash withdrawal with an Automated Teller Machine (ATM). Such transactions are called in-person transactions (or proximity transactions or face-to-face transactions) because the cardholder is at the same location as the payment terminal.

### (Summary of the Invention)

There is a need to allow people to perform payments through smart cards, including credit cards, while limiting the risk of increases in the debt of individuals or households.

The invention aims at solving the above-mentioned technical problem.

An object of the present invention is a method for managing a proximity monetary transaction for an amount involving a banking terminal and a payment instrument that is assigned to a user. The payment instrument comprises a payment application designed to participate to the monetary transaction in a first way by using a conventional account uniquely assigned to said user and in a second way by using a relay account uniquely assigned to a person different from said user. During the monetary transaction, responsive to a command requesting a cryptogram to be generated by the payment instrument for the monetary transaction, performing by the payment instrument a selection procedure which leads to select the second way only if a predefined condition is met. Only if the second way is selected, sending by the payment instrument to the banking terminal a relay request comprising a first identifier (e.g. IBAN) of said relay account, said relay request requesting that the amount be paid from the relay account, subject to agreement of said person specifically for said monetary transaction.

Advantageously, the command may be a Generate AC command as defined by EMVCo^{®} specifications, the banking terminal may be assigned to a merchant,

responsive to the receipt of the relay request, the banking terminal may send to a server of a bank entity a relay message comprising both the first identifier, said amount and a second identifier of a bank account assigned to said merchant. Upon receipt of said relay message, the server of the bank entity may trigger sending an agreement request to a portable device assigned to said person. Upon receipt of an agreement response sent by said portable device, the method may comprise sending to the banking terminal a payment status reflecting approval or denial of the monetary transaction by said person. Only if the agreement response reflects approval of the monetary transaction, the method may comprise sending an order requesting a credit transfer from said relay account to the account assigned to said merchant for said amount.

Advantageously, upon receipt of said payment status, the banking terminal may send to the payment instrument a Generate TC command as defined by EMVCo^{®} Specifications comprising a data reflecting approval or denial of the monetary transaction and upon receipt of the Generate TC command, the method may comprise sending to the banking terminal a TC response as defined by EMVCo^{®} Specifications comprising a transaction certificate generated by the payment instrument.

Advantageously, only if said Generate TC command comprises a data reflecting approval of the monetary transaction, the method may comprise generating by the payment instrument the transaction certificate for an amount equal to zero.

Advantageously, the relay account may be a bank account opened with a first banking institution. The bank entity may have a relay bank server uniquely assigned to the first banking institution. A second bank server may be uniquely assigned to a second banking institution with which said bank account assigned to said merchant is opened. The payment status may be sent by the second bank server upon receipt of the order requesting the credit transfer.

Advantageously, the conventional account may be a bank account opened with a third banking institution. An issuer bank server may be uniquely assigned to the third banking institution and the relay bank server may send to the issuer bank server a transfer notification reflecting the sending of the order requesting the credit transfer.

Advantageously, the relay account may be a bank account opened with a first banking institution. A second bank server may be uniquely assigned to a second banking institution with which said bank account assigned to said merchant is opened. The conventional account may be a bank account opened with a third banking institution. Said bank entity may comprise an issuer bank server uniquely assigned to the third banking institution. Upon receipt of the relay message, the issuer bank server may send a request to pay to the relay bank server. The relay bank server may send to the issuer bank server a transfer notification reflecting the sending of the order requesting the credit transfer and upon receipt of the transfer notification the issuer bank server may send the payment status to the banking terminal.

Advantageously, the relay request may include a cryptogram comprising said first identifier and the banking terminal may directly forward the cryptogram through the relay message to the issuer bank server.

Advantageously, both the relay request and the relay message may be an Online authorization request as defined by EMVco^{®} specifications and include a data element comprising said first identifier.

Advantageously, the portable device may comprise a user interface, upon receipt of said agreement request, the portable device may make an attempt to capture through the user interface a data reflecting approval of the monetary transaction by said person and may generate the agreement response reflecting a result of the attempt.

Advantageously, both said relay message and agreement request may comprise parameters of the monetary transaction, and the portable device may comprise an engine which automatically generates the agreement response reflecting approval of the monetary transaction by said person only if said transaction parameters comply with a pre-stored authorization context.

Another object of the present invention is a payment instrument assigned to a user and able to participate to a proximity monetary transaction for an amount with a banking terminal. The payment instrument comprises a payment application designed to participate to the monetary transaction in a first way by using a conventional account uniquely assigned to said user and in a second way by using a relay account uniquely assigned to a person different from said user. During the monetary transaction, responsive to a command requesting a cryptogram to be generated by the payment instrument for the monetary transaction, the payment instrument is configured to perform a selection procedure which leads to select the second way only if a predefined condition is met. Only if the second way is selected, the payment instrument is configured to send to the banking terminal a relay request comprising a first identifier of said relay account, said relay request requesting that the amount be paid from the relay account, subject to agreement of said person specifically for the monetary transaction.

Advantageously, the payment instrument may receive from the banking terminal a parameter of the monetary transaction and the predefined condition may be met if the parameter belongs to a set previously stored in the payment instrument.

Advantageously, the payment instrument may be a payment card, a payment ring, a payment bracelet, a payment watch or a digital wallet hosted on a phone.

Another object of the present invention is a payment system comprising the payment instrument according to the invention, a banking terminal assigned to a merchant, and a bank entity. Responsive to the receipt of a relay request comprising a first identifier of said relay account sent by the payment instrument, the banking terminal is configured to send to the bank entity a relay message comprising both the first identifier, an amount of said monetary transaction and a second identifier of a bank account assigned to said merchant. Upon receipt of said relay message, the bank entity is configured to trigger sending an agreement request to a portable device assigned to said person. Upon receipt of an agreement response sent by said portable device, the bank entity is configured to send to the banking terminal a payment status reflecting approval or denial of the monetary transaction by said person and, only if the agreement response reflects approval of the monetary transaction, the bank entity is configured to trigger sending of an order requesting a credit transfer from said relay account to the account assigned to said merchant for said amount.

### (Brief description of the drawings)

Other characteristics and advantages of the present invention will emerge more clearly from reading the following description of a number of preferred embodiments of the invention with reference to the corresponding accompanying drawings in which:
- Fig. 1 shows an exemplary flow diagram for managing a monetary transaction involving a payment instrument according to a first example of the invention;
- Fig. 2 shows an exemplary flow diagram for managing a monetary transaction involving a payment instrument according to a second example of the invention;
- Fig. 3 shows an exemplary flow diagram for managing a monetary transaction involving a payment instrument according to a third example of the invention; and
- Fig. 4 shows a diagram of architecture of a payment system for managing a monetary transaction according to an example of the invention.

### (Detailed description of the preferred embodiments)

The invention may apply to any type of payment instrument usually associated to a user (i.e. cardholder). The payment instrument may be a physical smart card, a smartwatch, a wearable device or a digital payment card hosted in a mobile phone for instance.

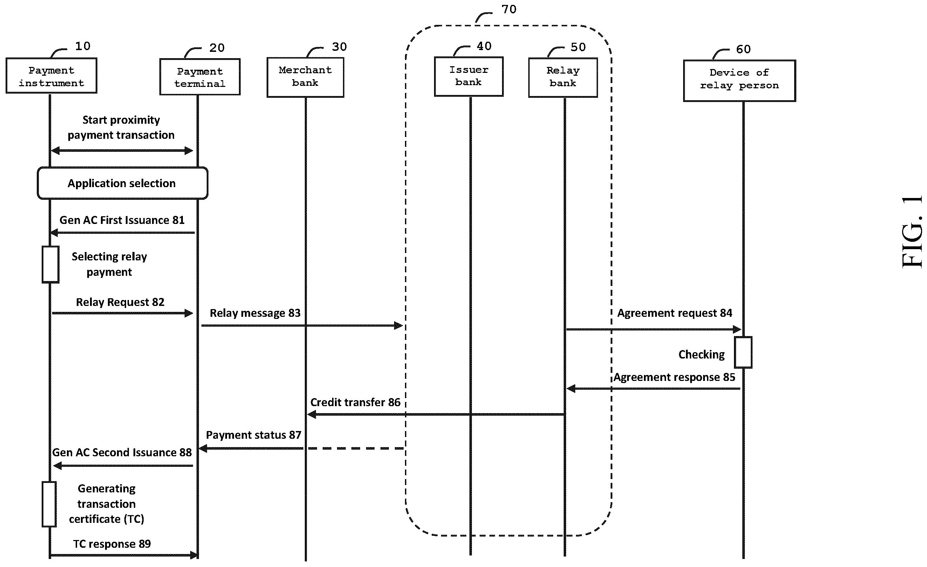

Figure 1 depicts an exemplary flow diagram for managing a monetary transaction involving a payment instrument according to a first example of the invention.

In this example, the payment instrument 10 is a physical banking card intended to be used by its associated genuine user (i.e. bank customer) for payment transaction or cash withdrawal. The physical banking card 10 can be a contactless card.

Let's assume that the user of the payment instrument wants to perform a face-to-face payment transaction with a payment terminal 20 for a money amount. In other words, the payment instrument and the payment terminal are placed close to each other. The user may tap the payment instrument with the payment terminal to allow the payment instrument to contribute to the payment transaction.

The payment application has been configured to participate to the monetary transaction in a first way by using a conventional bank account uniquely assigned to the user (to whom the payment instrument is assigned) and in a second way by using a relay account uniquely assigned to a person different from the user of the payment instrument.

The relay account (of the second person) and the conventional bank account (of the user) can be open with a same bank or different banks.

The person owning the relay account can be called the relay person and can be a patron, a sponsor, a generous donor, a charity organization, or a public body.

During the monetary transaction, responsive to a command 81 requesting a cryptogram to be generated by the payment instrument for the monetary transaction, the payment instrument performs a selection procedure which leads to select the second way only if a predefined condition is met. Otherwise, the payment instrument can select the first way to carry out the monetary transaction.

Then, only if the second way is selected, the payment instrument sends to the banking terminal a relay request 82 comprising an identifier 14 of the relay account. The relay request 82 requests that the amount be paid from the relay account, subject to agreement of said person specifically for the monetary transaction.

The first identifier can be an international bank account number (IBAN) or any reference allowing to uniquely identify the relay account.

Only if the first way is selected, the payment instrument sends to the banking terminal a conventional response to the command requesting the cryptogram. For instance, the payment instrument 10 can send an ARQC-R as defined by EMVCo^{®} specifications.

As detailed in Fig. 1, one the proximity payment transaction has started, some messages cany be exchanged between the payment instrument 10 and the banking terminal 20 to select a payment application embedded in the payment instrument.

Then the banking terminal 20 can send to the payment instrument a Generate Application Cryptogram First Issuance (also referred to as Generate AC First Issuance or Gen AC First Issuance) command 81 as defined by EMVCo^{®} specifications.

Then the payment instrument 10 can perform a selection procedure which leads to select the second way only if a predefined condition is met.

The predefined condition can be assessed by a risk management software module embedded in the payment instrument. This risk management mechanism may be similar to the card risk management mechanism as defined by EMVCo^{®} with additional input and output items.

The payment instrument 10 can receive from the banking terminal 20 an element 71 of the monetary transaction and check whether the predefined condition is met if the element belongs to a set 16 previously stored in the payment instrument.

Typically, an input item can a transaction element 71 sent by the banking terminal 20.

The transaction element can be a money amount and the set can be a range of authorized amounts.

The transaction element can be a date and the set can be a range of authorized dates. For instance, the set can specify the last 10 days of the current month.

The transaction element can be an identifier of the merchant (or of a store) to which is assigned the banking terminal 20 and the set can be a list of authorized merchants or stores.

The transaction element can be a geographical position and the set can be a list of authorized countries, cities, or districts.

The transaction element can be the currency of the transaction and the set can be a list of authorized currencies.

The transaction element can be the type of the transaction (payment or cash withdrawal) and the set can specify that only payment transactions are authorized.

The set can specify that only 4 monetary transactions are authorized a month.

Combination of the above-presented examples can be implemented. For example, the predefined set 16 can specify that only payment transactions whose amount is below 55 Euros are authorized when it takes place in Spain.

Turning back to the detail of the flow of Fig. 1, responsive to the receipt of the relay request 82, the banking terminal 20 sends to a bank entity 70 a relay message 83 that comprises both the identifier of the relay account (like an IBAN for instance), the transaction amount and an identifier of a bank account assigned to the merchant.

As shown in Figure 1, the bank entity 70 can comprise a server of the issuer bank 40 and a server of the relay bank 50.

Upon receipt of the relay message 83, the bank entity 70 triggers the sending of an agreement request 84 to a portable device 60 assigned to the relay person (E.g. the sponsor or the generous donor). Preferably, the portable device is a smartphone.

The relay message 83 can convey additional parameters of the transaction like the name of the merchant, the type of service/good that is the subject of the transaction.

The relay person can check parameters of the transaction and give their approval or refusal to continue the payment transaction through the user interface of the portable device 60.

Upon receipt of an agreement response 85 sent by the portable device 60 to the bank entity 70, only if the agreement response 85 reflects approval of the monetary transaction, the server of the relay bank 50 sends to the server of the merchant bank 30 an order 86 requesting a credit transfer from the relay account to the account assigned to the merchant for the transaction amount. The order 86 can be an instant payment, instant credit transfer or SEPA Instant Credit Transfer.

The bank entity 70 can send to the banking terminal 20 a payment status 87 reflecting approval or denial of the monetary transaction by the relay person. Alternatively, the server of the merchant bank 30 can send the payment status 87 to the banking terminal 20.

The payment status 87 can reflect the confirmation of the effective payment.

Upon receipt of the payment status 87, the banking terminal 20 can send to the payment instrument 10 a command 88 requesting the payment instrument to generate a transaction certificate.

The payload of the command 88 can comprise a data reflecting approval or denial of the payment transaction. Upon receipt of the command 88, the payment instrument generates a certificate of the transaction then sends to the banking terminal 20 a response 89 comprising the transaction certificate generated by the payment instrument. The generated transaction certificate can comprise information related to the fact that a relay payment has been successfully performed. The banking terminal 20 can send the response 89 (via the banking terminal 20) to the server of the issuer bank 40 so that the issuer bank 40 is aware of the payment transaction and can include data related to the payment transaction in the expense report provided to the user of the payment instrument.

In some embodiments, only if the command 88 comprises a data reflecting approval of the monetary transaction, the payment instrument can generate a transaction certificate for an amount equal to zero. Such a transaction certificate reflects the fact that the payment has been done through an out-of-band mechanism, without changing the balance of the conventional bank account uniquely allocated to the user of the payment instrument.

In some embodiments, the command 88 can be the Generate Application Cryptogram Second Issuance (also referred to as Generate AC Second Issuance or Gen AC Second Issuance) command and the response 89 can be the corresponding response as defined by EMVCo^{®} Specifications. In particular, bits B8-B7 of the P1 byte could be set to "01" to request the card to reply with a transaction certificate TC.

In the present document, the Generate Application Cryptogram Second Issuance command is also named Generate TC command.

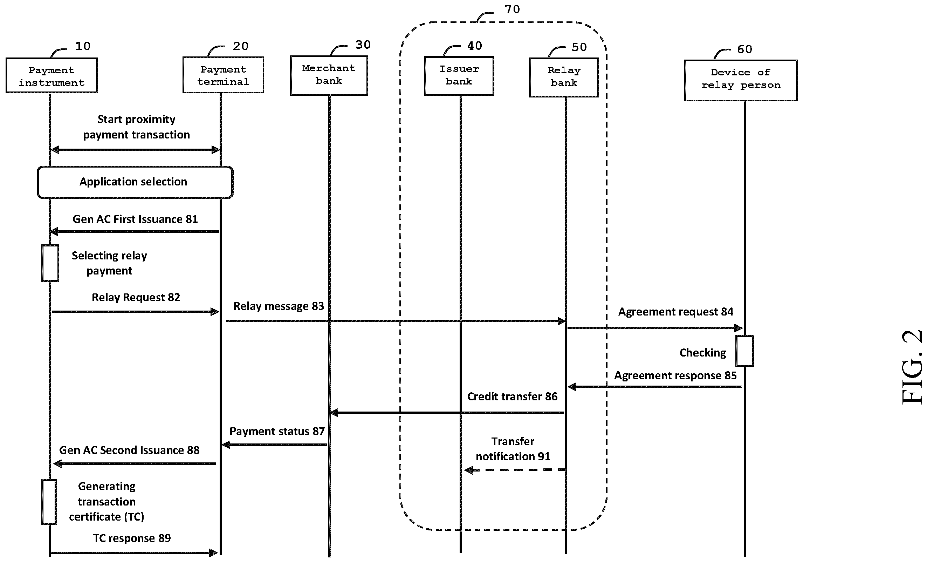

Figure 2 depicts an exemplary flow diagram for managing a monetary transaction involving a payment instrument according to a second example of the invention.

The relay account is a bank account opened with a first banking institution 50 (named Relay bank). The bank entity 70 comprises a hardware server (named relay bank server) which is uniquely assigned to the first banking institution.

The banking terminal 20 can send the relay message 83 to the relay bank server. The relay message 83 can comprise both the transaction amount, the identifier (sometimes referenced as the first identifier) of the relay account (like an IBAN for instance), and an identifier (sometimes referenced as the second identifier) of the bank account assigned to the merchant.

A second bank server is uniquely assigned to a second banking institution (which is the merchant bank 30) with which the bank account assigned to the merchant is opened.

The payment status 87 can be sent to the banking terminal 20 by the second bank server upon receipt of the order 86 requesting the credit transfer.

The conventional account can be a bank account opened with a third banking institution (called the issuer bank 40, i.e. the bank that issued the payment instrument 10). The payment instrument can store a reference of the conventional account in the form of a Primary Account Number (PAN) as defined by ISO/IEC 7812 standard for instance. An issuer bank server can be uniquely assigned to the third banking institution. In some embodiments, the server of the relay bank 50 can send to the issuer bank server a transfer notification 91 reflecting the sending (to the server of the merchant bank 30) of the order 86 requesting the credit transfer.

If the server of the relay bank denies the payment (for instance because the relay account is not sufficiently funded), the payment transaction fails, and the merchant is not paid.

In the example of Figure 2, the relay message 83 is equivalent to a request of instant credit transfer directly sent by the banking terminal 20 to the server of the relay bank 50.

It is to be noted that according to the working mode presented at Figure 2, an instant payment can be initiated by the banking terminal (after specific triggering by the payment instrument) that directly connects to the server of the relay bank identified by the IBAN provided by the payment instrument in the relay request 82. Since the transaction can take place between the relay bank and the merchant bank, no action from the server of the issuer bank is required to complete the instant payment operation.

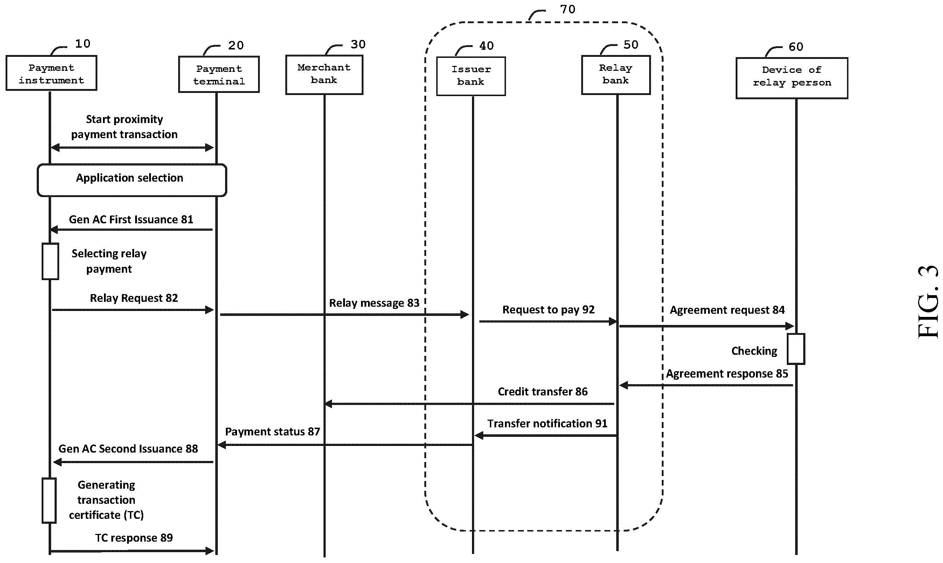

Figure 3 depicts an exemplary flow diagram for managing a monetary transaction involving a payment instrument according to a third example of the invention.

This flow is similar to the one described at Figure 2 with below-presented differences.

Similarly to elements presented in Fig. 2, the relay account can be a bank account opened with a first banking institution 50 (i.e. the Relay bank). Another hardware server (also named second bank server can be uniquely assigned to a second banking institution 30 (i.e. the merchant bank) with which the bank account assigned to the merchant is opened.

The conventional account of the user can be a bank account opened with a third banking institution 40 (i.e. the Issuer bank) . The bank entity 70 can comprise a server of the issuer bank 40.

Upon receipt of the relay message 83 from the payment terminal 20, the issuer bank server can send a request to pay 92 to the relay bank server. The relay bank server can send to the issuer bank server a transfer notification 91 reflecting the sending of the order 86 requesting the credit transfer. Upon receipt of the transfer notification 91 the issuer bank server can send a payment status 87 to the banking terminal 20.

In some embodiments, the relay request 82 can include a cryptogram comprising the identifier 14 (also referenced as the first identifier) of the relay account and the banking terminal 20 can directly forward the cryptogram through the relay message 83 to the server of the issuer bank 40. The cryptogram can be called Authorization Request Relay Party (ARRP) and contain as a data element the IBAN of the relay account.

In some embodiments, both the relay request 82 and the relay message 83 constitute an Online authorization request as defined by EMVCo^{®} specifications and include a data element comprising the identifier 14 of the relay account.

The portable device 60 comprises a user interface 61. In some embodiments, upon receipt of the agreement request 84, the portable device provides the relay person 77 with transaction parameters (like the amount or the merchant's name for instance) and makes an attempt to capture through the user interface 61 a data reflecting approval of the monetary transaction by the relay person 77 and generates the agreement response 85 reflecting a result of the attempt. Thus, an explicit agreement can be requested by the sponsor mobile phone in order to send a proof of consent to the relay bank server.

In addition, an authentication of the relay person can be conducted by the portable device before generating the agreement response 85.

In some embodiments, the portable device 60 can perform an automatic agreement by checking preset conditions without waiting for user action on the sponsor mobile phone. Both the relay message 83 and the agreement request 84 can comprise parameters of the monetary transaction, and the portable device 60 can comprise an engine 62 which automatically generates the agreement response 85 reflecting approval of the monetary transaction by the relay person 77 only if said transaction parameters comply with a pre-stored authorization context 63.

For instance, the pre-stored authorization context 63 can define a rule specifying that two payment transactions for an amount below 33 US dollars are allowed a week and four cash withdrawal below 22 US dollars are allowed a month. The engine 62 automatically compare the received transaction parameters with the pre-stored authorization context 63 to make a decision reflecting a preset consent of the relay person 77.

In the example of Figure 3, the request to pay 92 is equivalent to a request of instant credit transfer directly sent by the server of the issuer bank 40 to the server of the relay bank 50.

It is to be noted that according to the working modes presented at Figure 3, an instant payment can be initiated by the server of the issuer bank (after specific triggering by the payment instrument that is transmitted via the banking terminal) that directly connects to the server of the relay bank identified by the IBAN provided by the payment instrument in the initial relay request 82.

In a variant working mode, the IBAN can be added as new Data Element (DE) included in the Data Field of a conventional Online Authorization request (complying with EMVCo Specifications) sent to the issuer bank. In such a case, the transaction can appear to be a nominal EMV^{®} payment transaction from the banking terminal's perspective.

In some embodiments, the relay payment can be automatically selected after the rejection of a first attempt to pay by the issuer bank in conventional way. This may occur when the bank account of the cardholder is not sufficiently funded for instance.

In such a scenario, the GENERATE AC First Issuance 81 command will make the card responding with an ARQC.

The Issuer can look at the PAN, identify the Relay and ask the Relay to pay (knowing that the Relay may refuse to pay). In both cases, the Issuer is going to decline the card transaction. Therefore, in its response to the Terminal, the Terminal is instructed to send to the card a GENERATE AC Second Issuance (AAC) where AAC means Application Authentication Cryptogram informing the card that the Transaction was declined. Then, the card will respond with an APPLICATION CRYPTOGRAM (AC) . An advantage of this embodiment is that the payment is conducted as a full conventional EMV^{®} transaction, without a need for new EMVCo^{®} commands.

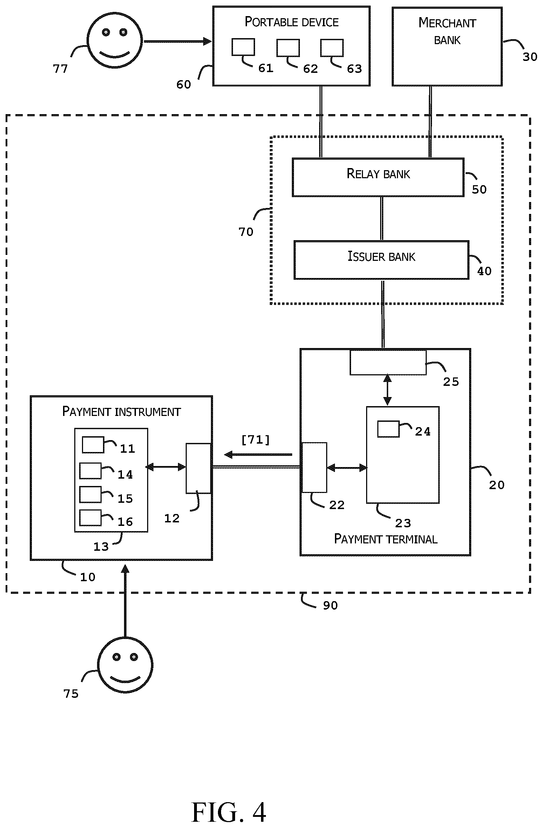

Figure 4 depicts a diagram of architecture of a payment system 90 for managing a monetary transaction according to an example of the invention.

In this example, the payment instrument 10 is a credit card allocated to an associated genuine user 75.

The payment instrument 10 embeds a secure element 13 comprising a hardware processing unit, a memory storing an operating system 15 and a banking application 11 designed to contribute to payment services. The payment instrument 10 has a communication interface 12 configured to communicate through a contact or contactless communication protocol. Preferably, the payment instrument 10 is a proximity card able to communicate through a contactless protocol as defined by the ISO 14443 standard.

The payment instrument 10 is configured to participate to a proximity monetary transaction for an amount with a banking terminal 20. For instance, the proximity monetary transaction can be a payment transaction with a payment terminal at a store.

The banking application 11 is designed to participate to the monetary transaction in a first way by using a conventional account uniquely assigned to the user 75 and in a second way by using a relay account uniquely assigned to a relay person 77 different from the user 75.

During the monetary transaction, responsive to a command 81 requesting a cryptogram to be generated by the payment instrument for the monetary transaction, the banking application 11 can be configured to perform a selection procedure which aims at selecting one of the two payment ways. The banking application 11 can be configured to select the second way only if a predefined condition is met. This condition checking can be carried out through a card risk management procedure.

Only if the second way is selected, the banking application 11 is configured to generate, and send to the banking terminal 20, a relay request 82 comprising an identifier 14 of the relay account. The relay request 82 requests that the amount be paid from the relay account, subject to agreement of the relay person 77 specifically for the monetary transaction.

In some embodiments, the payment instrument stores a set 16 of values. When the payment instrument receives from the banking terminal a parameter 71 of the monetary transaction, the banking application 11 is configured to consider the predefined condition is met only if the parameter belongs to the set 16. Preferably, the set 16 has been defined by the issuer bank and previously stored in the payment instrument during a personalization phase.

Although described as a physical smart card in the above-presented examples, the payment instrument can be a payment ring, a payment bracelet, a payment watch, or a digital wallet hosted on a phone.

The payment system 90 comprises the payment instrument 10, a banking terminal 20 assigned to a merchant, and a bank entity 70. In the example of Fig. 4, the bank entity 70 includes a hardware server of the issuer bank 40 and a hardware server of the relay bank 50.

The banking terminal 20 can be a Point-Of-Sale (POS) terminal or an Automated Teller Machine (ATM).

The banking terminal 20 comprises a first communication interface 22 designed to communicate with the payment instrument and a second communication interface 25 able to communicate with remote servers. The communication session established between the banking terminal and the remote server can rely on conventional network systems like a private network, the Internet and Telecom networks.

The banking terminal 20 comprises an identifier 24 of a bank account assigned to the merchant.

In response to the receipt of a relay request 82 comprising the identifier 14 of the relay account sent by the payment instrument 10, the banking terminal 20 comprises a manager unit 23 configured to generate and send to the bank entity 70 a relay message 83 that comprises both the identifier 14, the money amount of the monetary transaction and an identifier 24 of a bank account assigned to the merchant.

Upon receipt of the relay message 83, the bank entity 70 is configured to trigger the sending of an agreement request 84 to a portable device 60 assigned to the person 77. Preferably, a reference of the portable device 60 has been registered in the server of the relay bank 50 in a previous phase.

Upon receipt of an agreement response 85 sent by the portable device, the bank entity 70 is configured to send to the banking terminal 20 a payment status 87 reflecting approval or denial of the monetary transaction by the relay person 77. The bank entity 70 is configured to trigger sending of an order 86 requesting a credit transfer from the relay account to the account assigned to the merchant for the transaction amount only if the agreement response 85 reflects approval of the monetary transaction by the person 77.

The portable device 60 may be a mobile phone, a Personal Digital Assistant (PDA), or a wearable device like a connected watch, a connected ring or a pair of connected glasses for instance.

In the present description, each server of the issuer bank, the relay bank and the merchant bank is a hardware server comprising one or more hardware processors and program instructions designed to provide the above-described services and functions of these servers.

The invention is not limited to the described embodiments or examples. In particular, the described examples and embodiments may be combined.

Thanks to some embodiments of the invention, during a proximity (i.e. face-to-face) payment transaction, the decision to initiate the relay payment is automatically taken by the payment instrument and executed in a transparent way for both the payer and the payee.

Thanks to some embodiments of the invention, the duration of the whole payment transaction is reasonable for the user compared to transactions in which an online checking of the PIN code typed by the user is performed by the issuer bank server.

Thanks to some embodiments of the invention, existing payment infrastructure can be reused with slight adaptations that can be done through deployment of a piece of extra-software needed in the banking terminals to process the new message handled by the banking terminals.

## Claims

1. A method for managing a proximity monetary transaction for an amount involving a banking terminal (20) and a payment instrument (10) assigned to a user (75),
wherein the payment instrument comprises a payment application (11) designed to participate to the monetary transaction in a first way by using a conventional account uniquely assigned to said user and in a second way by using a relay account uniquely assigned to a person (77) different from said user,
wherein, during the monetary transaction, responsive to a command (81) requesting a cryptogram to be generated by the payment instrument for the monetary transaction, performing by the payment instrument a selection procedure which leads to select the second way only if a predefined condition is met,
wherein, only if the second way is selected, sending by the payment instrument to the banking terminal (20) a relay request (82) comprising a first identifier (14) of said relay account, said relay request (82) requesting that the amount be paid from the relay account, subject to agreement of said person (77) specifically for said monetary transaction.

2. The method according to claim 1, wherein the command (81) is a Generate AC command (81) as defined by EMVCo^{®} specifications, wherein the banking terminal (20) is assigned to a merchant,
wherein, responsive to the receipt of the relay request (82), sending by the banking terminal (20) to a server of a bank entity (70) a relay message (83) comprising both the first identifier (14), said amount and a second identifier (24) of a bank account assigned to said merchant,
wherein, upon receipt of said relay message (83), triggering by the server of the bank entity (70) sending an agreement request (84) to a portable device (60) assigned to said person (77),
wherein, upon receipt of an agreement response (85) sent by said portable device, sending to the banking terminal (20) a payment status (87) reflecting approval or denial of the monetary transaction by said person and, only if the agreement response (85) reflects approval of the monetary transaction, sending an order (86) requesting a credit transfer from said relay account to the account assigned to said merchant for said amount.

3. The method according to claim 2, wherein, upon receipt of said payment status (87), sending by the banking terminal to the payment instrument a Generate TC command (88) as defined by EMVCo^{®} Specifications comprising a data reflecting approval or denial of the monetary transaction and wherein upon receipt of the Generate TC command (88), sending to the banking terminal a TC response (89) as defined by EMVCo^{®} Specifications comprising a transaction certificate generated by the payment instrument.

4. The method according to claim 3, wherein, only if said Generate TC command (88) comprises a data reflecting approval of the monetary transaction, generating by the payment instrument the transaction certificate for an amount equal to zero.

5. The method according to claim 2, wherein the relay account is a bank account opened with a first banking institution (50); wherein the bank entity (70) has a relay bank server uniquely assigned to the first banking institution; wherein a second bank server is uniquely assigned to a second banking institution (30) with which said bank account assigned to said merchant is opened and wherein the payment status (87) is sent by the second bank server upon receipt of the order (86) requesting the credit transfer.

6. The method according to claim 5, wherein the conventional account is a bank account opened with a third banking institution; wherein an issuer bank server is uniquely assigned to the third banking institution (40) and wherein the relay bank server sends to the issuer bank server a transfer notification (91) reflecting the sending of the order (86) requesting the credit transfer.

7. The method according to claim 2, wherein the relay account is a bank account opened with a first banking institution (50); wherein a second bank server is uniquely assigned to a second banking institution (30) with which said bank account assigned to said merchant is opened; wherein the conventional account is a bank account opened with a third banking institution (40); wherein said bank entity (70) comprises an issuer bank server uniquely assigned to the third banking institution; wherein upon receipt of the relay message (83), the issuer bank server sends a request to pay (92) to the relay bank server; wherein the relay bank server sends to the issuer bank server a transfer notification (91) reflecting the sending of the order (86) requesting the credit transfer and wherein upon receipt of the transfer notification (91) the issuer bank server sends the payment status (87) to the banking terminal (20).

8. The method according to claim 7, wherein the relay request (82) includes a cryptogram comprising said first identifier (14), and wherein the banking terminal (20) directly forwards the cryptogram through the relay message (83) to the issuer bank server.

9. The method according to claim 7, wherein both the relay request (82) and the relay message (83) are an Online authorization request as defined by EMVco^{®} specifications and include a data element comprising (83) said first identifier (14).

10. The method according to claim 2, wherein the portable device (60) comprises a user interface (61), wherein upon receipt of said agreement request (84), the portable device makes an attempt to capture through the user interface a data reflecting approval of the monetary transaction by said person (77) and generates the agreement response (85) reflecting a result of the attempt.

11. The method according to claim 2, wherein both said relay message (83) and agreement request (84) comprise parameters of the monetary transaction, and wherein the portable device (60) comprises an engine (62) which automatically generates the agreement response (85) reflecting approval of the monetary transaction by said person (77) only if said transaction parameters comply with a pre-stored authorization context (63).

12. A payment instrument (10) assigned to a user (75) and able to participate to a proximity monetary transaction for an amount with a banking terminal (20),
wherein the payment instrument comprises a payment application (11) designed to participate to the monetary transaction in a first way by using a conventional account uniquely assigned to said user and in a second way by using a relay account uniquely assigned to a person (77) different from said user,
wherein, during the monetary transaction, responsive to a command (81) requesting a cryptogram to be generated by the payment instrument for the monetary transaction, the payment instrument is configured to perform a selection procedure which leads to select the second way only if a predefined condition is met,
wherein, only if the second way is selected, the payment instrument is configured to send to the banking terminal (20) a relay request (82) comprising a first identifier (14) of said relay account, said relay request (82) requesting that the amount be paid from the relay account, subject to agreement of said person (77) specifically for the monetary transaction.

13. The payment instrument according to claim 12, wherein the payment instrument receives from the banking terminal a parameter (71) of the monetary transaction and wherein the predefined condition is met if the parameter belongs to a set (16) previously stored in the payment instrument.

14. The payment instrument according to claim 12, wherein the payment instrument is a payment card, a payment ring, a payment bracelet, a payment watch or a digital wallet hosted on a phone.

15. A payment system (90) comprising the payment instrument of claim 12, a banking terminal (20) assigned to a merchant, and a bank entity (70),
wherein, responsive to the receipt of a relay request (82) comprising a first identifier (14) of said relay account sent by the payment instrument, the banking terminal is configured to send to the bank entity (70) a relay message (83) comprising both the first identifier (14), an amount of said monetary transaction and a second identifier (24) of a bank account assigned to said merchant,
wherein, upon receipt of said relay message (83), the bank entity (70) is configured to trigger sending an agreement request (84) to a portable device (60) assigned to said person (77),
wherein, upon receipt of an agreement response (85) sent by said portable device, the bank entity (70) is configured to send to the banking terminal a payment status (87) reflecting approval or denial of the monetary transaction by said person and, only if the agreement response (85) reflects approval of the monetary transaction, the bank entity (70) is configured to trigger sending of an order (86) requesting a credit transfer from said relay account to the account assigned to said merchant for said amount.
